# EUROPEAN PATENT APPLICATION

(11) **EP 4 763 396 A1**
(43) Date of publication of application: **24.06.2026**
(21) Application number: 25794820.8
(22) Date of filing: 06.01.2025
(51) Int. Cl.: B23K 20/10, B23K 101/36

(54) **HEAD STRUCTURE FOR ULTRASONIC WELDING**

(30) Priority: 23.04.2024 KR 20240054115
(71) Applicant: LG Energy Solution, Ltd., Seoul 07335 (KR)
(72) Inventor: LEE, Tae Min, Daejeon 34122 (KR); CHOI, Kyu Hyun, Daejeon 34122 (KR); LEE, In Seok, Daejeon 34122 (KR); PARK, Chan Woong, Daejeon 34122 (KR); CHOI, Han Seok, Daejeon 34122 (KR); LIM, Sung Sang, Daejeon 34122 (KR)
(74) Representative: Goddar, Heinz J.
(86) International application number: PCT/KR2025/000225
(87) International publication number: WO 2025/225821

(57) **Abstract**

The present disclosure relates to a head structure for ultrasonic welding, and the head structure for ultrasonic welding according to one aspect of the present disclosure may include a head body including a base surface; and a pad-type welding body and a general welding body provided on the base surface and capable of welding a predetermined object, wherein at least a portion of the pad-type welding body may have a different cross-sectional area from the general welding body based on a plane parallel to the base surface.

## Description

### TECHNICAL FIELD

### CROSS-REFERENCE TO RELATED APPLICATIONS

The present application claims priority to Korean Patent Application No. 10-2024-0054115 filed on April 23, 2024 in the Republic of Korea, the disclosures of which are incorporated herein by reference.

### TECHNICAL FIELD

The present disclosure relates to a head structure for ultrasonic welding, and more specifically, to a head structure for ultrasonic welding capable of performing ultrasonic welding in direct contact with an object to be worked on.

### BACKGROUND ART

Ultrasonic welding is a process of welding two objects by applying ultrasonic vibration to the two objects in contact with each other and using the frictional heat generated by the vibration. This ultrasonic welding may be used to weld two objects made of metal. As a specific example, ultrasonic welding is also utilized to couple electrode tabs and electrode leads together in the process of manufacturing secondary batteries.

As a configuration of a device for performing ultrasonic welding, a head structure for welding is used. The head structure for welding has a plurality of welding bodies. These welding bodies have a shape protruding outward, and the head structure vibrates in a state where the end of the welding body is in direct contact with the object to be worked on, thereby welding the object.

However, according to the conventional head structure for welding, there were many cases where uneven welding was performed due to differences in welding strength between the plurality of welding bodies. As a specific example, there were cases where ultrasonic vibration was transmitted relatively concentratedly to welding bodies positioned in the center of the head structure, resulting in over-welding, and cases where ultrasonic vibration was transmitted relatively weakly to welding bodies positioned in the side of the head structure, resulting in under-welding.

Furthermore, in the case of conventional head structure for welding, as the plurality of welding bodies were operated with different welding strengths, there were cases where the degree of wear was different for each welding body. This caused a problem where other welding bodies that could still be used were unnecessarily wasted as some welding bodies were worn out and due for the replacement cycle.

### SUMMARY

### TECHNICAL PROBLEM

The present disclosure is designed to solve the problems of the related art, and therefore the present disclosure is directed to providing a head structure for ultrasonic welding capable of uniformly welding a region.

The present disclosure is also directed to providing a head structure for ultrasonic welding having a uniform life cycle between welding bodies.

Technical problems to be solved by the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is provided a head structure for ultrasonic welding including a head body including a base surface; and a pad-type welding body and a general welding body provided on the base surface and capable of welding a predetermined object, wherein at least a portion of the pad-type welding body has a different cross-sectional area from the general welding body based on a plane parallel to the base surface.

At this time, the pad-type welding body may include a pad portion provided on the base surface; a pad-side extension portion extending from the pad portion in a direction away from the base surface and having a smaller cross-section than the pad portion; and a plurality of welding portions protruding from an end surface of the pad-side extension portion.

At this time, the pad portion may include a pad cross-section parallel to the base surface, and the pad-side extension portion may include a pad-side extension cross-section parallel to the base surface, wherein the pad cross-section may have a wider area than the pad-side extension cross-section.

At this time, the general welding body may include a general extension portion extending from the base surface and having a smaller cross-section than the pad portion; and a plurality of welding portions protruding from an end of the general extension portion.

At this time, the pad portion may include a pad cross-section parallel to the base surface, and the general extension portion may include a general extension cross-section parallel to the base surface, wherein the pad cross-section may have a wider area than the general extension cross-section.

At this time, the head body may include a body portion extending in one direction; and a coupling portion provided on one side of the body portion in the extension direction, wherein the base surface may be provided on a side part of the body portion based on the extension direction of the body portion.

At this time, the pad portion may extend parallel to the extension direction of the body portion.

At this time, the general welding body may be positioned closer to the center of the base surface than the pad-type welding body in a width direction of the base surface, and the width direction of the base surface may be a direction perpendicular to the extension direction of the body portion.

At this time, the general welding body may include a first general welding body; and a second general welding body arranged side by side with the first general welding body in the width direction of the base surface, wherein the pad-type welding body may be positioned on one side of the first and second general welding bodies arranged side by side.

At this time, the pad-type welding body may include a first pad-type welding body disposed on one side of the first and second general welding bodies based on the arrangement direction; and a second pad-type welding body disposed on the other side of the first and second general welding bodies based on the arrangement direction.

At this time, the pad portion and the pad-side extension portion may be integrally formed.

At this time, the welding portion may have a cross-section that becomes narrower toward the end side.

At this time, the plurality of welding portions may be arranged in a grid shape to form a plurality of rows and columns.

At this time, the welding portion may include a welding surface provided on the end side; and a side surface connecting the welding surface and the end surface of the pad-side extension portion.

At this time, an angle formed by the side surface and the end surface of the pad-side extension portion may be 64 degrees or more and 72 degrees or less.

### ADVANTAGEOUS EFFECTS

According to one aspect of the present disclosure, a general welding body and a pad-type welding body are provided on the base surface of the head body, and the pad-type welding body is configured to have a wider cross-section than the general welding body based on a surface parallel to the base surface, so that the pad-type welding body may receive vibration from the head body through a wider area than the general welding body.

Accordingly, even if the pad-type welding body is positioned in a place where it may receive less vibration than the general welding body, the pad-type welding body may perform a welding process with the same strength as the general welding body.

Through this, the head structure for ultrasonic welding according to one aspect of the present disclosure may weld one area with uniform strength. And, the life cycle of the general welding body and the life cycle of the pad-type welding body may be similarly matched.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a perspective view of a head structure for ultrasonic welding according to an embodiment of the present disclosure, viewed from above.
FIG. 2 is an enlarged view of part A of FIG. 1.
FIG. 3 is an enlarged view of a part of FIG. 2. At this time, the pad-type welding body is indicated by a dotted line, and the cross-section of the pad-type welding body is indicated by a hatched surface.
FIG. 4 is a vertical cross-sectional view of the pad-type welding body shown in FIG. 2.
FIG. 5 is a plan view of the pad-type welding body shown in FIG. 2, viewed from above.
FIG. 6 is a cross-sectional view enlarged to allow the welding portion of the pad-type welding body shown in FIG. 2 to be clearly visible.
FIG. 7 is an enlarged view of another part of FIG. 2. At this time, the general welding body is indicated by a dotted line, and the cross-section of the general welding body is indicated by a hatched surface.
FIG. 8 is a plan view of the general welding body shown in FIG. 7, viewed from above.

### DETAILED DESCRIPTION

Preferred embodiments of the present disclosure will be described in detail to enable those skilled in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

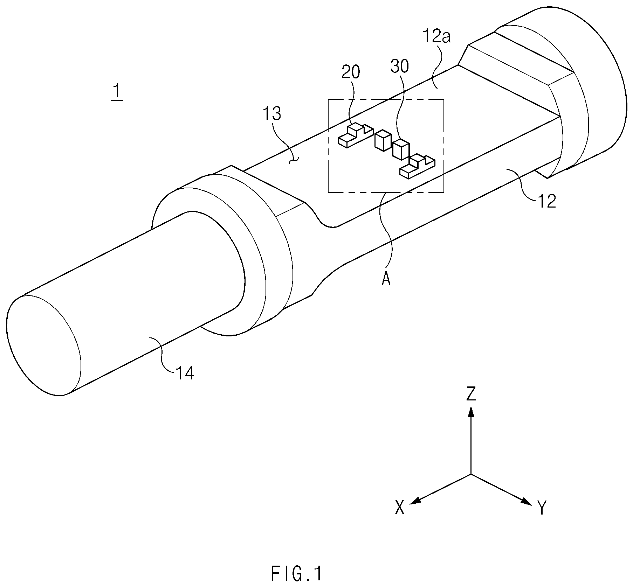

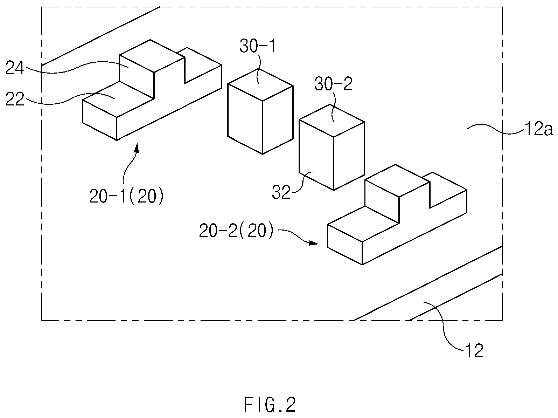

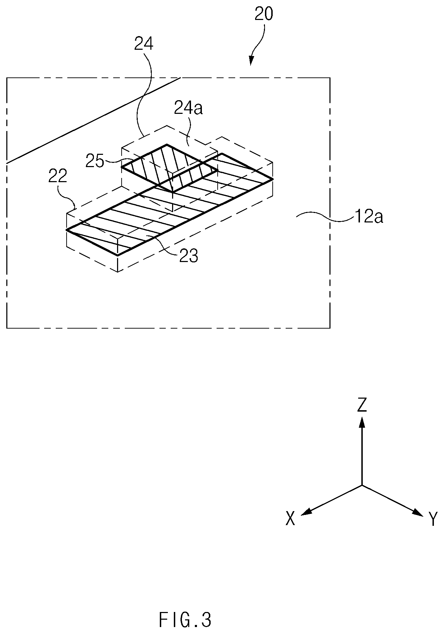

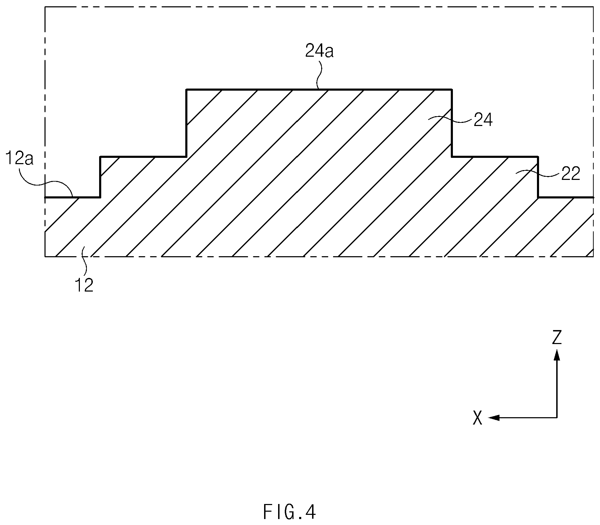

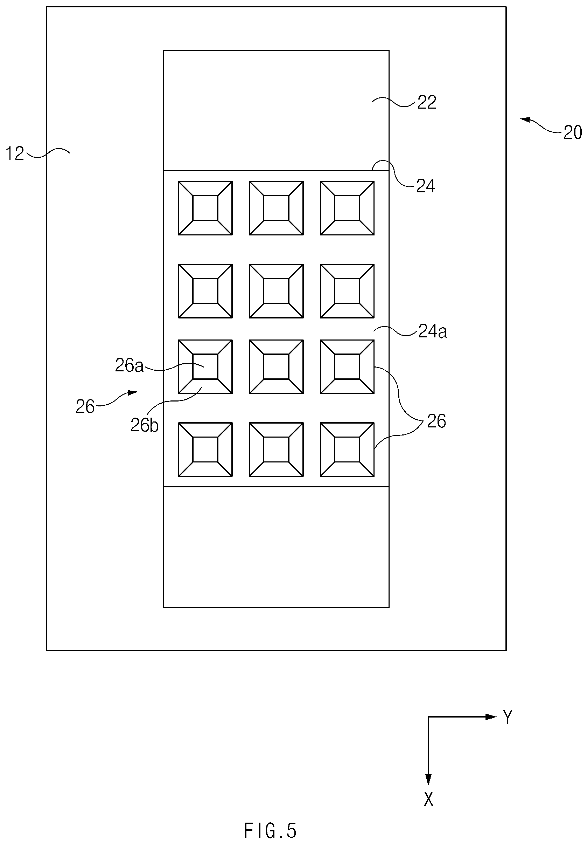

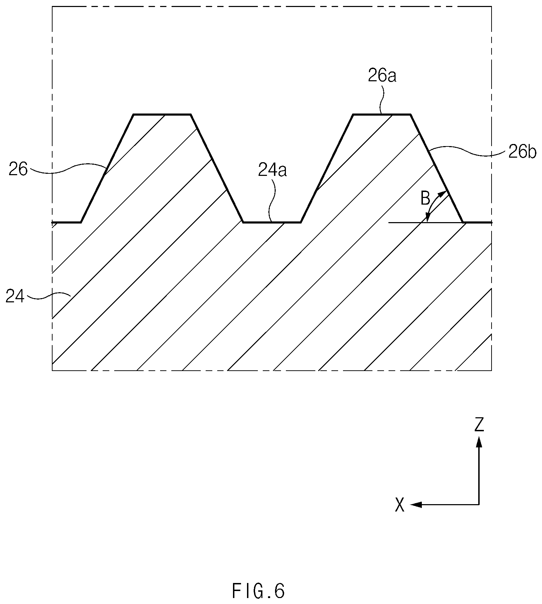

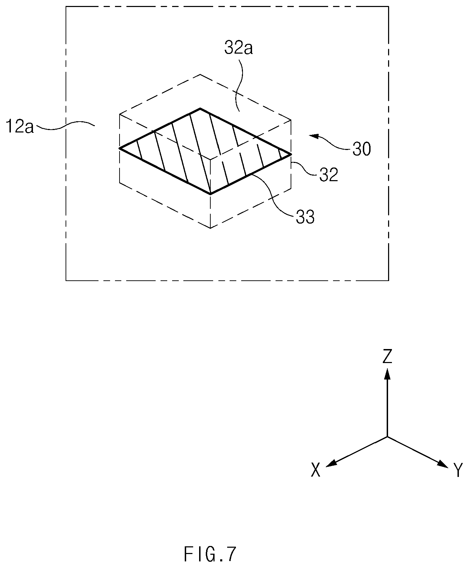

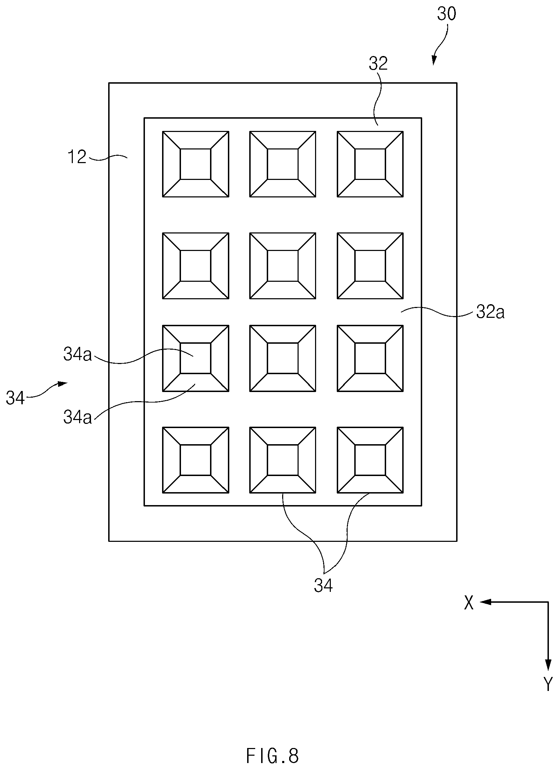

FIG. 1 is a perspective view of a head structure for ultrasonic welding according to an embodiment of the present disclosure, viewed from above. FIG. 2 is an enlarged view of part A of FIG. 1. FIG. 3 is an enlarged view of a part of FIG. 2. At this time, the pad-type welding body is indicated by a dotted line, and the cross-section of the pad-type welding body is indicated by a hatched surface. FIG. 4 is a vertical cross-sectional view of the pad-type welding body shown in FIG. 2. FIG. 5 is a plan view of the pad-type welding body shown in FIG. 2, viewed from above. FIG. 6 is a cross-sectional view enlarged to allow the welding portion of the pad-type welding body shown in FIG. 2 to be clearly visible. FIG. 7 is an enlarged view of another part of FIG. 2. At this time, the general welding body is indicated by a dotted line, and the cross-section of the general welding body is indicated by a hatched surface. FIG. 8 is a plan view of the general welding body shown in FIG. 7, viewed from above. At this time, in FIGS. 1 to 4 and FIG. 7, the welding portions of the pad-type welding body and the general welding body are not shown for simplicity of the drawings.

In FIGS. 1 to 8, a head structure for ultrasonic welding 1 (hereinafter, referred to as a head structure) according to an embodiment of the present disclosure is disclosed. Referring to FIG. 1, the head structure 1 according to an embodiment of the present disclosure may be a head structure for performing an ultrasonic welding process.

To this end, a portion of the head structure 1 according to this embodiment may be operatively coupled to other external devices. For example, a coupling portion 14 of the head structure 1 to be described later may be coupled to the other device. The head structure 1 may receive vibration energy from the other device and perform a welding process.

Hereinafter, the configuration of the head structure according to an embodiment of the present disclosure will be described in detail.

Referring to FIG. 1, the head structure 1 according to an embodiment of the present disclosure may include a head body 10. The head body 10 may be configured to provide a base for welding bodies 20, 30 to be described later. The head body 10 may transmit vibration applied from an external device to the welding bodies 20, 30.

In this embodiment, the head body 10 may include a body portion 12 extending in one direction. As shown, the body portion 12 may be provided as a rod-shaped member extending along the front-back direction (X-axis direction).

At this time, a welding space 13 may be provided on a side part of the body portion 12 based on the extension direction (X-axis direction) of the body portion 12 in this embodiment. Here, the side part in the extension direction (X-axis direction) may mean a part placed in a direction perpendicular to the extension direction (X-axis direction) (a direction parallel to the Y-Z plane). In other words, the side part may mean a part placed on the perimeter side of the body portion 12.

In this embodiment, the welding space 13 may be a space in which a work object to be welded by this head structure 1 is disposed. As an example, the work object may be an electrode lead and an electrode tab that are components of a secondary battery.

At this time, in this embodiment, the welding space 13 of the body portion 12 may be formed by the side part of the body portion 12 being concavely recessed. As shown, the welding space 13 may be provided on an inner side of the part where the side part of the body portion 12 is concavely recessed inward. This recessed part may perform a function of indicating the part where the work object is disposed.

At this time, in this embodiment, the body portion 12 may be provided with a base surface 12a. The base surface 12a may be a surface on which the welding bodies 20, 30 to be described later are provided. The work object of the welding process may be seated on the base surface 12a.

In this embodiment, the base surface 12a may define a portion of the welding space 13. The base surface 12a may be provided on the bottom of the part where the side part of the body portion 12 is concavely recessed. The base surface 12a may extend in the front-back direction (X-axis direction) along the length of the body portion 12.

Meanwhile, in this embodiment, the welding space 13 and the base surface 12a of the body portion 12 may be formed oppositely (or symmetrically) on both side parts of the body portion 12. As shown, the welding space 13 and the base surface 12a may be formed oppositely in the vertical direction (Z-axis direction) on the upper and lower parts of the body portion 12.

Through this, when the welding bodies 20, 30 provided on one of the two opposing base surfaces 12a reach the end of their service life, the head structure 1 may be flipped over and the welding bodies 20, 30 provided on the other surface may be used. Therefore, more welding processes may be performed with one head structure 1.

Referring to FIG. 1 again, the head body 10 of the head structure 1 according to an embodiment of the present disclosure may include a coupling portion 14. The coupling portion 14 may be configured to operatively couple the head body 10 to other external devices.

In this embodiment, the coupling portion 14 may be provided on one side of the body portion 12 in the extension direction. As shown, the coupling portion 14 may be provided on the front (positive direction of the X-axis) side of the body portion 12.

In this embodiment, the coupling portion 14 may be provided as a cylindrical member capable of being coupled to a predetermined hole. However, the shape or structure of the coupling portion 14 is not particularly limited as long as it may be coupled to other external devices.

Meanwhile, in the head structure 1 according to an embodiment of the present disclosure, the intensity of vibration transmitted through the head body 10 may vary at different positions of the base surface 12a. For example, the central part of the base surface 12a may have a stronger intensity of vibration transmitted than the side part.

This is because the central part of the base surface 12a is positioned closer to the coupling portion 14 through which the vibration is transmitted. This difference may cause uneven welding and a difference in the life cycle of the welding bodies 20, 30.

Here, the central part and side part of the base surface 12a may mean a part positioned adjacent to the center of the body portion 12 based on the width direction (Y-axis direction) of the base surface 12a and another part positioned relatively on the side.

Referring to FIGS. 1 to 4, the head structure 1 according to an embodiment of the present disclosure may include a plurality of welding bodies 20, 30. The welding bodies 20, 30 may be configured to perform welding in direct contact with the work object.

At this time, the welding bodies 20, 30 of the head structure 1 according to an embodiment of the present disclosure may include a pad-type welding body 20. The pad-type welding body 20 may include a pad portion 22 provided on the base surface 12a.

In this embodiment, the pad portion 22 may be provided as a pad-shaped member provided on the base surface 12a. The pad portion 22 may extend along the extension direction (X-axis direction) of the body portion 12.

At this time, the pad portion 22 may have a pad cross-section 23 based on a surface parallel to the base surface 12a. The pad cross-section 23 may have a wider area than the general extension cross-section 33 of the general welding body 30 to be described later.

Through this, the pad-type welding body 20 may receive vibration through a wider area than the general welding body 30 to be described later. The effect according to this will be described later together with the relative positional relationship between the pad-type welding body 20 and the general welding body 20.

Meanwhile, in this embodiment, the pad portion 22 is provided as a hexahedral pad member. However, the shape of the pad portion 22 is not particularly limited as long as the pad cross-section 23 described above may have a wider area than the cross-section of the general welding body 20.

For example, the pad portion 22 may have a polygonal column shape whose cross-sectional area becomes smaller toward the upper side. At this time, the upper surface of the pad portion 22 may be preferably larger than the general extension cross-section 33 to be described later.

The pad-type welding body 20 of the head structure 1 according to an embodiment of the present disclosure may include a pad-side extension portion 24. The pad-side extension portion 24 may extend from the pad portion 22. At this time, the pad-side extension portion 24 may extend upward (positive direction of the Z-axis) to be away from the base surface 12a.

In this embodiment, the pad-side extension portion 24 may have a pad-side extension cross-section 25 based on a surface parallel to the base surface 12a. At this time, the pad-side extension cross-section 25 may have a smaller area than the pad cross-section 23 described above. Through this, the vibration transmitted through the pad portion 22 may be concentrated at the pad-side extension portion 24 and its intensity may be amplified.

Meanwhile, in this embodiment, the pad-side extension portion 24 is provided as a member in the shape of a rectangular column extending vertically (in the Z-axis direction). However, the shape of the pad-side extension portion 24 is not particularly limited.

For example, the pad-side extension portion 24 may have a triangular or hexagonal column shape, and may have different thicknesses in one section and another section in the vertical direction (Z-axis direction).

Referring to FIGS. 4 to 6, the pad-type welding body 20 of the head structure 1 according to an embodiment of the present disclosure may include a plurality of welding portions 26. The welding portion 26 may protrude from the end surface 24a of the pad-side extension portion 24 in the extension direction.

In this embodiment, the welding portion 26 may have a shape in which the cross-section becomes narrower toward the end side. This may be to concentrate and amplify the vibration transmitted through the pad-side extension portion 24 at the end.

In this embodiment, the welding portion 26 may include a welding surface 26a provided at the end and a side surface 26b connecting the welding surface 26a and the end surface 24a. The welding surface 26a may be a surface in contact with an object, and the side surface 26b may be provided along the perimeter of the welding portion 26.

At this time, the welding surface 26a may be square, and the side surface 26b may be composed of four inclined surfaces that connect four sides of the end surface 24a and the end surface 24a, respectively. In other words, the welding portion 26 may be provided as a member in the shape of a trapezoidal column whose cross-section becomes narrower toward the upper side (in the positive direction of the Z-axis) as shown.

At this time, according to the head structure 1 according to an embodiment of the present disclosure, the end surface 24a and the side surface 26b may form a predetermined angle. Hereinafter, the predetermined angle is referred to as angle B.

In this embodiment, the angle B may be appropriately set as necessary. For example, the angle B may be set in consideration of the life cycle of the welding bodies 20, 30 and/or the welding defect rate by the welding portion 26.

As a specific example, the inventors confirmed that the smaller the angle B, the shorter the life cycle of the welding bodies 20, 30. And, the inventors confirmed that this phenomenon is because the smaller the angle B, the greater the change in the area of the welding surface 26a due to the wear of the welding bodies 20, 30.

Such excessive change in the area of the welding surface 26a may cause a problem that welding is performed in a part that is too large or too small compared to a designed area, or that welding reliability is deteriorated.

In consideration of the research results as described above, the inventors confirmed that when the angle B is 64 degrees or more, the change in the area of the welding surface 26a due to the wear may be limited to an appropriate range. In consideration of this point, the angle B may be 64 degrees or more.

As another specific example, the inventors confirmed that the greater the angle B, the higher the welding defect rate of the welding bodies 20, 30. The inventors confirmed that the above-described phenomenon is because the vibration energy is not properly concentrated on the welding surface 26a of the welding portion 26 as the angle B increases.

In consideration of the research results as described above, the inventors confirmed that when the angle B is 72 degrees or less, welding defects occur below the confidence range. In consideration of this, the angle B may be 72 degrees or less. Of course, the angle B may have a size outside the above-described range as necessary.

Meanwhile, in this embodiment, the welding portion 26 has been described as having a trapezoidal column shape whose cross-section becomes narrower toward the upper side (positive direction of the Z-axis). However, the shape or structure of the welding portion 26 is not particularly limited as long as it may concentrate or amplify the ultrasonic vibration transmitted to the welding surface 26a.

Referring to FIGS. 2, 7, and 8 again, the welding bodies 20, 30 of the head structure 1 according to an embodiment of the present disclosure may include a general welding body 30. The general welding body 30 may include a general extension portion 32 extending outward from the base surface 12a. The general extension portion 32 may perform a function of transmitting and amplifying vibration transmitted from the head body 10 to the welding portion 34 to be described later.

At this time, in this embodiment, the general extension portion 32 may have a hexahedral shape extending upward (in the positive direction of the Z-axis). Of course, the shape or structure of the general extension portion 32 may be modified as necessary. For example, the general extension portion 32 may have a polygonal columnar shape, or the thickness or width of one section may be different from that of another section in the vertical direction (Z-axis direction).

Meanwhile, in this embodiment, the general extension portion 32 may have a general extension cross-section 33 based on a surface parallel to the base surface 12a. At this time, the general extension cross-section 33 may have a smaller area than the pad cross-section 23 described above. In other words, the pad cross-section 23 may have a larger area than the general extension cross-section 33.

This may be to ensure that the area where the general welding body 30 receives vibration from the head body 10 is smaller than that of the pad-type welding body 20. The effect according to this will be described later together with the relative positional relationship between the pad-type welding body 20 and the general welding body 30.

The general welding body 30 of the head structure 1 according to an embodiment of the present disclosure may include a plurality of welding portions 34. The welding portion 34 may protrude from the end surface 32a of the general extension portion 32 in the extension direction.

In this embodiment, the welding portion 34 may include a welding surface 34a provided on the end side of the welding portion 34 and a side surface 34b connecting the welding surface 34a and the end surface 32a to each other. At this time, the welding portion 34 of the general welding body 30 according to this embodiment may be configured in the same manner as the welding portion 26 of the pad-type welding body 20 described above.

At this time, referring to FIGS. 3 and 7, in this embodiment, the height at which the end surface 32a of the general welding body 30 is spaced apart from the base surface 12a may be the same as the height at which the end surface 24a of the pad-type welding body 20 is spaced apart from the base surface 12a. Of course, the end surfaces 32a, 24a may be configured to have different heights spaced apart from the base surface 12a.

Hereinafter, the relative positions of the pad-type welding body 20 and the general welding body 30 of the present disclosure and the effects thereof will be described in detail.

Referring to FIGS. 1 to 3 and FIG. 7, in the head structure 1 according to an embodiment of the present disclosure, the relative positions of the pad-type welding body 20 and the general welding body 30 may be appropriately disposed. For example, the pad-type welding body 20 and the general welding body 30 may be disposed in consideration of the welding strength performed in each of the welding bodies 20, 30 and/or the life cycle of the welding bodies 20, 30.

For example, in this embodiment, the magnitude of the vibration energy per unit area transmitted to the welding bodies 20, 30 through the base surface 12a of the head body 10 may be larger in the central part of the base surface 12a than in the side part, and in consideration of this point, the pad-type welding body 20 may be positioned in the side part of the base surface 12a, and the general welding body 30 may be positioned in the central part of the base surface 12a.

Here, the central part means a part positioned adjacent to the center of the body portion 12 based on the width direction (Y-axis direction) of the base surface 12a, and the side part means a part closer to the edge side in the width direction (Y-axis direction) than the central part.

Referring to the drawings, in this embodiment, the pad-type welding body 20 may include a first pad-type welding body 20-1 and a second pad-type welding body 20-2, and the general welding body 30 may include a first general welding body 30-1 and a second general welding body 30-2.

And, the first and second general welding bodies 30-1, 30-2 may be arranged side by side in the width direction (Y-axis direction) of the base surface 12a, and the first and second pad-type welding bodies 20-1, 20-2 may be disposed on the outer sides of the first and second general welding bodies 30-1, 30-2 in the width direction (Y-axis direction) of the base surface 12a, respectively.

Accordingly, the pad-type welding body 20 and the general welding body 30 may perform the welding process with the same or similar strength, and each welding body 20, 30 may have the same or similar life cycle. This is because the difference in the cross-sectional area of the pad-type welding body 20 and the general welding body 30 may offset the difference in the vibration energy per unit area transmitted from the side part and the central part of the base surface 12a.

More specifically, in the side part of the base surface 12a, the magnitude of the vibration energy per unit area transmitted from the head body 10 is relatively small, but the pad-type welding body 20 receives vibration through the relatively wide pad cross-section 23. In contrast, in the central part of the base surface 12a, the magnitude of the vibration energy per unit area is relatively large, but the general welding body 30 receives vibration through the relatively narrow general extension cross-section 33. Through this, the welding bodies 20, 30 may perform the welding process with uniform strength and have the same or similar life cycles.

To confirm the superiority of the head structure 1 according to this embodiment, the inventors performed a test of welding two metal thin plates using the head structure 1 according to this embodiment and the head structure according to a comparative example.

In the head structure 1 according to an embodiment of the present disclosure, the specific shape of the pad-type welding body 20 is as follows. The X-axis direction length and Y-axis direction length of the pad portion 22 are 8 mm and 2 mm, respectively, and the X-axis direction length and Y-axis direction length of the pad-side extension portion 24 are 4 mm and 2 mm, respectively.

In the head structure 1 according to an embodiment of the present disclosure, the specific shape of the general welding portion 30 is as follows. The X-axis direction length and Y-axis direction length of the general extension portion 32 are 4 mm and 2 mm, respectively.

In the head structure according to the comparative example, four general welding bodies 30 are arranged on the base surface 12a in the left-right direction (Y-axis direction). The results of the test performed under different welding conditions are as shown in Table 1 below.

**[Table 1]**

| Welding Condition | | | Comparative Example | | | | Embodiment | | | |
|---|---|---|---|---|---|---|---|---|---|---|
| Amplitude [%] | Time [s] | Pressure [Mpa] | No.1 | No.2 | No.3 | No.4 | No.1 | No.2 | No.3 | No.4 |
| 54 | 0.054 | 0.03 | X | X | X | X | X | X | X | X |
| 57 | 0.057 | | X | X | X | X | O | X | O | O |
| 60 | 0.060 | | X | O | O | X | O | O | O | O |
| 65 | 0.060 | | X | O | O | X | O | O | O | O |
| 68 | 0.068 | | O | O | O | X | O | O | O | O |
| 71 | 0.071 | | O | O | O | X | O | O | O | O |
| 74 | 0.074 | | O | O | O | O | O | O | O | O |

In Table 1, the amplitude (%) refers to a ratio between the maximum amplitude and the minimum amplitude. It can be understood that the larger the amplitude (%), the greater the energy applied to the head structure according to the embodiment or the comparative example. In Table 1, No. 1 to No. 4 are designated in the order in which the welding bodies provided on the base surface of the head structure are arranged from the left side (negative direction of the Y-axis) to the right side (positive direction of the Y-axis). For example, in the comparative example and the embodiment, No. 1 and No. 4 refer to the welding bodies disposed at the outermost sides based on the left-right direction, and in the embodiment, No. 1 and No. 4 refer to pad-type welding body 20.

In Table 1, 'X' means that two metal thin films are not fully welded at the part welded by the welding body indicated in the same row and may be separated by an external force. Conversely, 'O' means that two metal films are fully welded at the part welded by the welding body indicated in the same row and are not separated by an external force. At this time, the external force may be a force pulled by the operator's hand.

Referring to Table 1, it can be confirmed that in the embodiment, both metal thin films are welded by the welding bodies Nos. 1 to 4 even in a low amplitude region compared to the comparative example. This suggests that in the head structure 1 according to this embodiment, the energy difference per unit area between the outermost welding bodies Nos. 1 and 4 and the inner welding bodies Nos. 2 and 3 may be offset, and thus welding may be performed with uniform quality under various welding conditions.

Meanwhile, the relative positional relationship between the pad-type welding body 20 and the general welding body 30 may be appropriately modified in consideration of the shape of the body portion 12 or the base surface 12a and the vibration energy per unit area transmitted at their local positions.

Referring to FIGS. 1 and 2 again, the body portion 12, the pad-type welding body 20, and the general welding body 30 of the head structure 1 according to an embodiment of the present disclosure may be integrally formed. Here, the integrated formation of the two configurations may mean that the two configurations are not physically and spatially separated or divided.

Through this, the vibration energy may be more effectively transmitted from the body portion 12 to the welding bodies 20, 30. Of course, if the vibration energy may be appropriately transmitted, the body portion 12 and the welding bodies 20, 30 may be provided as separate members and then assembled or coupled to each other.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Head structure for ultrasonic welding
10: Head body
12: Body portion
12a: Base surface
14: Coupling portion
20: Pad-type welding body
22: Pad portion
24: Pad-side extension portion
24a: End surface
26: Welding portion
26a: Welding surface
26b: Side surface
30: General welding body
32: General extension portion
32a: End surface
34: Welding portion
34a: Welding surface
34b: Side surface

## Claims

1. A head structure for ultrasonic welding, comprising:
a head body comprising a base surface; and
a pad-type welding body and a general welding body provided on the base surface and capable of welding a predetermined object,
wherein at least a portion of the pad-type welding body has a different cross-sectional area from the general welding body based on a plane parallel to the base surface.

2. The head structure for ultrasonic welding according to claim 1,
wherein the pad-type welding body comprises:
a pad portion provided on the base surface;
a pad-side extension portion extending from the pad portion in a direction away from the base surface and having a smaller cross-section than the pad portion; and
a plurality of welding portions protruding from an end surface of the pad-side extension portion.

3. The head structure for ultrasonic welding according to claim 2,
wherein the pad portion comprises a pad cross-section parallel to the base surface,
and
the pad-side extension portion comprises a pad-side extension cross-section parallel to the base surface,
wherein the pad cross-section has a wider area than the pad-side extension cross-section.

4. The head structure for ultrasonic welding according to claim 2,
wherein the general welding body comprises:
a general extension portion extending from the base surface and having a smaller cross-section than the pad portion; and
a plurality of welding portions protruding from an end of the general extension portion.

5. The head structure for ultrasonic welding according to claim 4,
wherein the pad portion comprises a pad cross-section parallel to the base surface,
and
the general extension portion comprises a general extension cross-section parallel to the base surface,
wherein the pad cross-section has a wider area than the general extension cross-section.

6. The head structure for ultrasonic welding according to claim 4,
wherein the head body comprises:
a body portion extending in one direction; and
a coupling portion provided on one side of the body portion in the extension direction,
wherein the base surface is provided on a side part of the body portion based on the extension direction of the body portion.

7. The head structure for ultrasonic welding according to claim 6,
wherein the pad portion extends parallel to the extension direction of the body portion.

8. The head structure for ultrasonic welding according to claim 6,
wherein the general welding body is positioned closer to the center of the base surface than the pad-type welding body in a width direction of the base surface, and
the width direction of the base surface is a direction perpendicular to the extension direction of the body portion.

9. The head structure for ultrasonic welding according to claim 8,
wherein the general welding body comprises:
a first general welding body; and
a second general welding body arranged side by side with the first general welding body in the width direction of the base surface,
wherein the pad-type welding body is positioned on one side of the first and second general welding bodies arranged side by side.

10. The head structure for ultrasonic welding according to claim 9,
wherein the pad-type welding body comprises:
a first pad-type welding body disposed on one side of the first and second general welding bodies based on the arrangement direction; and
a second pad-type welding body disposed on the other side of the first and second general welding bodies based on the arrangement direction.

11. The head structure for ultrasonic welding according to claim 2,
wherein the pad portion and the pad-side extension portion are integrally formed.

12. The head structure for ultrasonic welding according to claim 2,
wherein the welding portion has a cross-section that becomes narrower toward the end side.

13. The head structure for ultrasonic welding according to claim 2,
wherein the plurality of welding portions are arranged in a grid shape to form a plurality of rows and columns.

14. The head structure for ultrasonic welding according to claim 2,
wherein the welding portion comprises:
a welding surface provided on the end side; and
a side surface connecting the welding surface and the end surface of the pad-side extension portion.

15. The head structure for ultrasonic welding according to claim 14,
wherein an angle formed by the side surface and the end surface of the pad-side extension portion is 64 degrees or more and 72 degrees or less.
